# EUROPEAN PATENT SPECIFICATION

(11) **EP 3 257 651 B1**
(45) Date of publication and mention of the grant of the patent: **16.11.2022**
(21) Application number: 16764918.5
(22) Date of filing: 11.03.2016
(51) Int. Cl.: F16C 33/41, B29C 45/27, F16C 19/06, B29L 31/04

(54) **METHOD OF MANUFACTURING BEARING HOLDER**
VERFAHREN ZUR HERSTELLUNG EINER LAGERHALTERUNG
PROCÉDÉ DE FABRICATION DE SUPPORT DE PALIER

(30) Priority: 13.03.2015 JP 2015050957
(43) Date of publication of application: 20.12.2017
(73) Proprietor: NSK Ltd., Tokyo 141-8560 (JP)
(72) Inventor: KURAMOTO Yoshikazu, Fujisawa-shi Kanagawa 251-8501 (JP); AIHARA Nariaki, Fujisawa-shi Kanagawa 251-8501 (JP); HIRAMOTO Takayuki, Fujisawa-shi Kanagawa 251-8501 (JP)
(74) Representative: Mewburn Ellis LLP
(86) International application number: PCT/JP2016/057859
(87) International publication number: WO 2016/148088

(56) References cited:
- EP-A1- 0 879 687
- JP-A- H10 318 263
- JP-A- 2002 122 148
- JP-A- 2010 266 064
- JP-A- 2012 219 917
- JP-A- 2012 236 363
- JP-A- 2013 024 262
- JP-A- 2013 046 982
- JP-A- 2013 223 936
- JP-A- 2015 224 664
- JP-A- 2016 050 616
- JP-A- 2016 114 099
- JP-A- 2016 114 101
- JP-A- 2016 114 102
- JP-A- 2016 114 103
- US-A1- 2008 187 261

## Description

### TECHNICAL FIELD

The present invention relates to a method of manufacturing a bearing cage.

### RELATED ART

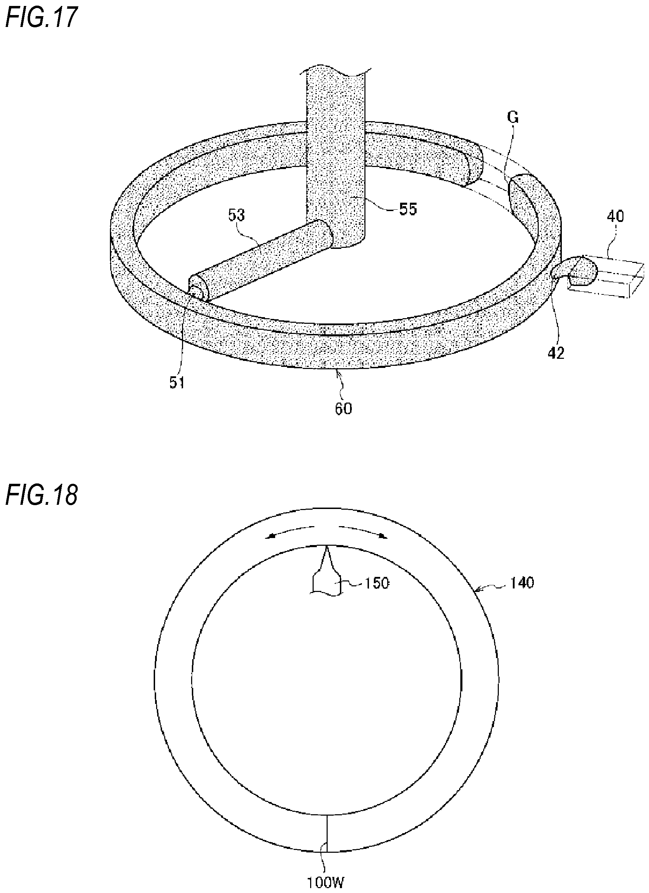

In general, a bearing cage is manufactured by injection molding. Specifically, as shown in FIG. 18, a molding die is formed therein with an annular cavity 140 corresponding to a bearing cage, which is a molded product, and a melted resin material (thermoplastic resin) is injected from a resin injection gate 150 provided at a peripheral edge portion of the cavity 140 and is then cooled and solidified, so that the bearing cage is manufactured.

The melted resin injected into the cavity 140 is divided into two flows to both circumferential sides in the cavity 140, which again converge at an opposite position radially facing the resin injection gate 150 and are joined to each other to form a weld 100W. In general, since the resin bearing cage, which is manufactured by the injection molding, is just obtained as the melted resin is welded and integrated, the melted resin is not uniformly mixed and the strength is lowered at the weld 100W.

Also, when the melted resin is added with a reinforced fiber material such as glass fiber, carbon fiber, metal fiber and the like, as a reinforced material, the reinforced fiber material is vertically oriented with respect to a flowing direction of the melted resin at the weld 100W, so that a reinforcing effect is not expressed. Also, since the reinforced fiber material is oriented in parallel with the flowing direction of the melted resin at a part except for the weld 100W, a strength difference between the part and the weld increases.

Like this, the resin bearing cage manufactured by the injection molding may be damaged from the weld at which the strength is low, in many cases. Particularly, when the weld is formed at a part (for example, a bottom of a pocket at which an axial thickness is smallest, an R portion of a corner part at which an annular part and a column portion intersect with each other) at which stress is most likely to be concentrated, the part is likely to be damaged, so that the durability of the cage is lowered. Therefore, in the related art, following measures have been taken.

According to a method of manufacturing a synthetic resin cage of Patent Document 1, which is in accordance with the preamble of claim 1, a cavity of a molding die is provided at a plurality of places in a circumferential direction with gates. Also, regarding a plurality of regions between the gates, circumferential distances of some regions are longer than those of the other regions. In the region having the longer circumferential distance, a resin reservoir is provided at a part at which the injected resin material converges. Thereby, the converged injected resin material is enabled to flow from the cavity into the resin reservoir so as to prevent the weld strength from being lowered. The openings of the gates and of the resin reservoir may be formed either in a pillar portion between pockets or in an annular portion.

According to a resin cage of Patent Document 2, a total number of pockets is an odd number by which the number of pockets to be disposed between the gates is most uniform. The resin reservoir is positioned at any one of column portions of both sides of a pocket positioned at a circumferential center between the gates between which the number of pockets is an odd number. Thereby, the weld, which is to be formed in the region between the gates between which the number of pockets is an odd number, is formed at a position deviating circumferentially from the bottom of the pocket, so that the rigidness of the cage is improved.

### Citation List

### Patent Document

Patent Document 1: Japanese Patent No. 3,666,536B, which corresponds to document EP 0 879 687 A1
Patent Document 2: Japanese Patent Application Publication No. 2008-095770A

### SUMMARY OF THE INVENTION

### Problems To Be Solved

However, according the manufacturing method disclosed in Patent Document 1, the resin reservoir is provided at the place at which the injected resin material is to converge, i.e., at the position that coincides with the weld formation position. Therefore, the reinforced fiber material is likely to be vertically oriented with respect to the flowing direction of the resin material in the vicinity of a communication portion (an opening) of the resin reservoir configured to communicate with the cavity, so that it is not possible to sufficiently achieve the weld reinforcing effect.

According to the resin cage disclosed in Patent Document 2, in a region between the gates between which the number of the pockets is an even number and the resin reservoir is not provided, the column portion is formed with the weld in which the melted resin is simply welded and integrated, so that the weld strength may be insufficient depending on using conditions.

The present invention has been made in view of the above situations, and an object thereof is to provide a method of manufacturing a bearing cage capable of suppressing strength decrease.

Further, also document JP 2013 223 936 A describes a method of manufacturing a comb cage with the features of the preamble of claim 1, whereby resin is injected through a plurality of gates and a plurality of reservoirs connected to cavities for forming column portions are provided. A similar method is described in document US 2008 187 261 A, whereby five gates are provided in combination with one reservoir.

### Means for Solving Problems

The above object of the present invention is accomplished by a method as defined in independent claim 1 and preferred embodiments thereof as defined in dependent claims 2 to 8, i.e. with the following configurations.
(1) A method of manufacturing a bearing cage that is to be formed by injecting a melted resin, from a plurality of resin injection gates provided at a peripheral edge portion of a substantially annular cavity formed in a molding die, into the cavity,
   wherein the bearing cage comprises:
   a substantially annular base part,
   a plurality of column portions protruding axially from one axial end face of the base part with predetermined intervals in a circumferential direction, and
   pockets formed by facing surfaces of the pair of adjacent column portions and one axial end face of the base part, a number of the pockets being same as a number of the column portions,
   wherein at least one column portion is provided with a resin reservoir capable of reserving therein the melted resin, and
   wherein a cross-sectional area of a communication portion of the resin reservoir configured to communicate with the column portion is equal to or smaller than 1/4 of a cross-sectional area of the resin injection gate.
(2) The method of the above (1),
   wherein the number of the column portions is an even number,
   wherein each of the column portions is provided with any one of the resin injection gate and the resin reservoir,
   wherein the plurality of resin injection gates and the plurality of resin reservoirs are alternately provided at the plurality of column portions in the circumferential direction,
   wherein the resin injection gate is disposed at a position deviating from a circumferential center of the column portion towards one side in the circumferential direction, and
   wherein the resin reservoir is disposed at the circumferential center of the column portion.
(3) The method of the above (1),
   wherein the number of the resin injection gates is three,
   wherein the number of the column portions is an even multiple of 3, and
   wherein when regions between the adjacent resin injection gates are denoted as first to third regions,
   the three resin injection gates are provided at positions deviating from a circumferential centers of the column portions towards one side in the circumferential direction so that the numbers of the pockets in the first to third regions are the same, and
   the resin reservoirs capable of reserving therein the melted resin are respectively provided at the circumferential centers of the column portions most distant from both ends of the first to third regions.
(4) The method of the above (1),
   wherein the number of the resin injection gates is three,
   wherein the number of the column portions is an even number which is not a multiple of 3, and
   wherein when regions between the adjacent resin injection gates are denoted as first to third regions,
   the numbers of the pockets in the first and second regions are the same and are an odd number,
   the number of the pockets in the third region is an even number and is greater or smaller by one than the numbers of the pockets in the first and second regions,
   the resin injection gate separating the first and second regions is provided at a position deviating from a circumferential center of the column portion towards the first region,
   the resin injection gate separating the second and third regions is provided at a position deviating from a circumferential center of the column portion towards the third region,
   the resin injection gate separating the third and first regions is provided at a position deviating from a circumferential center of the column portion towards the first region,
   one of the column portions in each of the first to third regions is provided with the resin reservoir capable of reserving therein the melted resin,
   the resin reservoirs in the first and second regions are respectively provided at a circumferential center of one column portion of a pair of column portions adjacent to the pocket positioned at a circumferential center of each of the first and second regions, and
   the resin reservoir in the third region is provided at a circumferential center of the column portion positioned at a circumferential center of the third region.
(5) The method of the above (1),
   wherein the number of the resin injection gates is three,
   wherein the number of the column portions is an odd number, which is not a multiple of 3, and
   wherein when regions between the adjacent resin injection gates are denoted as first to third regions,
   the numbers of the pockets in the first and second regions are the same and are an even number,
   the number of the pockets in the third region is an odd number and is greater or smaller by one than the numbers of the pockets in the first and second regions,
   the resin injection gate separating the first and second regions is provided at a position deviating from a circumferential center of the column portion towards the first region,
   the resin injection gate separating the second and third regions and the resin injection gate separating the third and first regions are provided at circumferential centers of the column portions,
   one of the column portions in each of the first to third regions is provided with the resin reservoir capable of reserving therein the melted resin,
   the resin reservoirs in the first and second regions are respectively provided at a circumferential center of the column portion positioned at a circumferential center of each of the first and second regions, and
   the resin reservoir in the third region is provided at a circumferential center of one column portion of a pair of column portions adjacent to the pocket positioned at a circumferential center of the third region.
(6) The method of the above (1),
   wherein the number of the resin injection gates is three,
   wherein the number of the column portions is an odd multiple of 3, and
   wherein when regions between the adjacent resin injection gates are denoted as first to third regions,
   the three resin injection gates are respectively provided at the column portions so that the numbers of the pockets in the first to third regions are the same, and
   the resin reservoir capable of reserving therein the melted resin is provided at one column portion of a pair of column portions adjacent to the pocket positioned at a circumferential center of each of the first to third regions.
(7) The method of the above (6),
   wherein each of the resin reservoirs provided in the first to third regions is provided at the column portion, which is positioned at a same direction-side in the circumferential direction, of the pair of column portions adjacent to the pocket positioned at the circumferential center of each of the first to third regions.
(8) The method of the above (6),
   wherein three resin injection gates are respectively provided at positions deviating from the circumferential centers of the column portions towards a same direction-side in the circumferential direction, and
   wherein each of the resin reservoirs provided in the first to third regions is provided at the column portion, which is positioned at the same direction-side as a deviation direction of the three resin injection gates, of the pair of column portions adjacent to the pocket positioned at the circumferential center of each of the first to third regions.

### Effects of the Invention

According to the method of manufacturing a bearing cage of the present invention, since the cross-sectional area of the communication portion of the resin reservoir is equal to or smaller than 1/4 of the cross-sectional area of the resin injection gate, the melted resin is introduced into the resin reservoir after the melted resin converges. Therefore, it is possible to further securely express the effect of controlling orientation of a reinforced fiber material by the forcible resin flow at the weld.

### BRIEF DESCRIPTION OF THE DRAWINGS

FIG. 1 is a plan view of a crown-shaped cage manufactured by a manufacturing method in accordance with a first embodiment.
FIG. 2 is a plan view of a crown-shaped cage manufactured by a manufacturing method in accordance with a second embodiment.
FIG. 3 is a plan view of a crown-shaped cage manufactured by a manufacturing method in accordance with a third embodiment.
FIG. 4 is a plan view of a crown-shaped cage manufactured by a manufacturing method in accordance with a fourth embodiment.
FIG. 5 is a plan view of a crown-shaped cage manufactured by a manufacturing method in accordance with a fifth embodiment.
FIG. 6 is a plan view of a crown-shaped cage manufactured by a manufacturing method in accordance with a sixth embodiment.
FIG. 7 is a plan view of a crown-shaped cage manufactured by a manufacturing method in accordance with a seventh embodiment.
FIG. 8 is a plan view of a crown-shaped cage manufactured by a manufacturing method in accordance with an eighth embodiment.
FIG. 9 is a plan view of a crown-shaped cage manufactured by a manufacturing method in accordance with a ninth embodiment.
FIG. 10 is a plan view of a crown-shaped cage manufactured by a manufacturing method in accordance with a tenth embodiment.
FIG. 11 is a plan view of a crown-shaped cage manufactured by a manufacturing method in accordance with an eleventh embodiment.
FIG. 12 is a plan view of a crown-shaped cage manufactured by a manufacturing method in accordance with a twelfth embodiment.
FIG. 13 is a plan view of a crown-shaped cage manufactured by a manufacturing method in accordance with a thirteenth embodiment.
FIG. 14 depicts a flowing aspect of a melted resin, in Example 1.
FIG. 15 depicts a flowing aspect of a melted resin, in Comparative Example 1.
FIG. 16 depicts a flowing aspect of a melted resin, in Comparative Example 2.
FIG. 17 depicts a flowing aspect of a melted resin, in Comparative Example 3.
FIG. 18 is a sectional view of a molding die that is to be used for a method of manufacturing a bearing cage in the related art.

### DETAILED DESCRIPTION OF PREFERRED EMBODIMENTS

Hereinafter, a method of manufacturing a bearing cage in accordance with embodiments of the present invention will be described in detail with reference to the drawings.

### (First Embodiment)

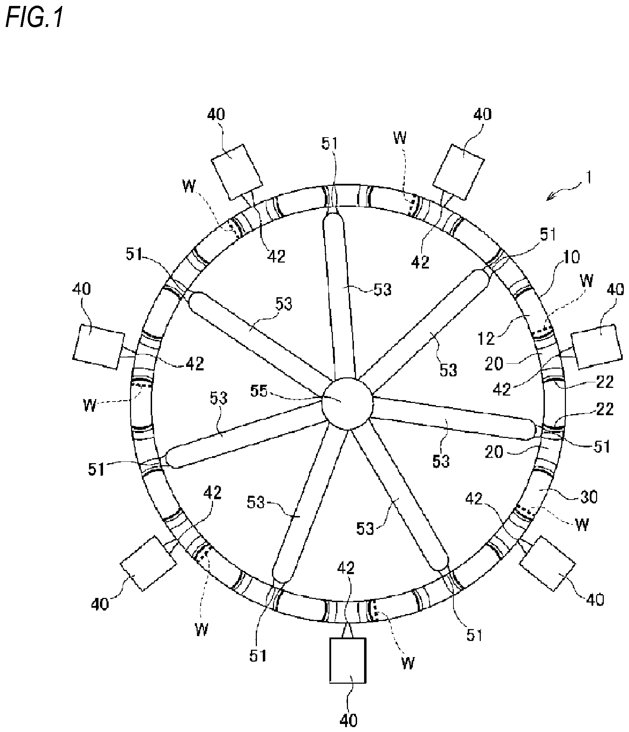

FIG. 1 depicts a bearing cage 1 (hereinafter, also simply referred to as 'cage') of a first embodiment. The cage 1 is a so-called crown-shaped cage, and has a substantially annular base part 10, a plurality of even column portions 20 (fourteen column portions, in the first embodiment) protruding axially from one axial end face 12 of the base part 10 with predetermined intervals in a circumferential direction and a plurality of even pockets 30 (fourteen pockets, in the first embodiment) each of which is formed by facing surfaces 22, 22 of the pair of adjacent column portions 20, 20 and one axial end face 12 of the base part 10 and is configured to hold therein a rolling element (not shown) of a bearing. That is, the same numbers of the pluralities of even column portions 20 and pockets 30 are formed, respectively, and the column portions 20 are provided at both circumferential sides of each pocket 30.

In a method of manufacturing the cage 1, a multipoint gate type injection molding is adopted. Specifically, the cage 1 is formed by injecting a melted resin having a reinforced fiber material added thereto from a plurality of resin injection gates (hereinafter, simply referred to as 'gate') 51 provided at a peripheral edge portion of an outer periphery-side of an annular cavity (not shown), which is formed in a molding die, into the cavity and cooling and solidifying the melted resin. As the resin material, a resin composition in which a reinforced fiber material (for example, glass fiber or carbon fiber) of 10 to 50 wt% is added to a polyamide-based resin such as 46 nylon, 66 nylon and the like or a resin such as polybutylene terephthalate, polyphenylene sulfide (PPS), polyether ether ketone (PEEK), polyether nitrile (PEN) and the like is used, for example. Meanwhile, although the cavity is not shown in FIG. 1, an internal structure thereof is substantially the same as the structure of the cage 1.

To each gate 51, the melted resin is supplied from a substantially cylindrical sprue 55 via a substantially cylindrical runner 53 extending radially. The sprue 55 extends axially at a substantial center of the cage 1 (the cavity) and is connected to the runner 53. Therefore, the melted resin supplied from the sprue 55 reaches each gate 51 via each runner 53 and is then introduced into the cavity from each gate 51 at the same time.

One of the gate 51 and a resin reservoir 40 capable of reserving therein the melted resin is provided at a position corresponding to the column portion 20, i.e., at a position circumferentially overlapping with the column portion 20. The numbers of the gates 51 and the resin reservoirs 40 are respectively set to a half (seven, in the first embodiment) of the number of the column portions 20 or the pockets 30, and the plurality of gates 51 and the plurality of resin reservoirs 40 are alternately provided at the plurality of column portions 20 in the circumferential direction.

Each gate 51 is disposed at a position deviating from a circumferential center of the column portion 20 towards one side (a counterclockwise direction in FIG. 1) in the circumferential direction. In contrast, each resin reservoir 40 is disposed to overlap with the circumferential center of the column portion 20. Meanwhile, in the first embodiment, the gate 51 is configured to communicate with an inner peripheral surface of the column portion 20 (cavity) and the resin reservoir 40 is configured to communicate with an outer peripheral surface of the column portion 20 (cavity).

In the above configuration, the melted resin injected into the cavity from the gate 51 and flowing to both circumferential sides of the gate 51 converges at an intermediate position of the adjacent gates 51. Specifically, the melted resin converges at a position deviating from the circumferential center of the column portion 20 positioned at the midpoint of the adjacent gates 51 towards one side in the circumferential direction, so that a weld W is formed at the converging position. That is, the weld W is formed at the position deviating from the circumferential center of the column portion 20 towards one side in the circumferential direction, and the resin reservoir 40 is disposed at the circumferential center of the column portion 20. In this way, since the formation position of the weld W and the disposition position of the resin reservoir 40 deviate in the circumferential direction, it is possible to easily generate a pressure gradient of the melted resin between the weld W and the resin reservoir 40. A forcible resin flow is caused due to the pressure gradient, so that it is possible to suppress the reinforced fiber material from being vertically oriented with respect to a flowing direction of the melted resin at the weld W. Also, since the resin reservoir 40 is disposed at the circumferential center of the column portion 20, the melted resin is caused to forcibly flow in a direction in which a cross-sectional area of a flow path increases from the weld W towards the resin reservoir 40. Therefore, a region of the weld W in which a fiber orientation is disturbed moves to a part of which a cross-sectional area is large, so that the strength of the weld W is further improved. In this way, the orientation of the reinforced fiber material in the weld W is suppressed, so that the strength of the weld W is improved and the cage 1 is suppressed from being lowered in terms of the strength.

Here, a cross-sectional area of a communication portion 42 of the resin reservoir 40, which is configured to communicate with the column portion 20 and is an opening to the cavity, is set to be equal to or smaller than 1/4 of a cross-sectional area of the gate 51 According to this setting, after the melted resin converges and the weld W is formed, the melted resin is introduced into the resin reservoir 40. Therefore, it is possible to further securely express the effect of controlling the orientation of the reinforced fiber material by the forcible resin flow at the weld W.

### (Second Embodiment)

Subsequently, a method of manufacturing a bearing cage in accordance with a second embodiment of the present invention is described with reference to the drawing.

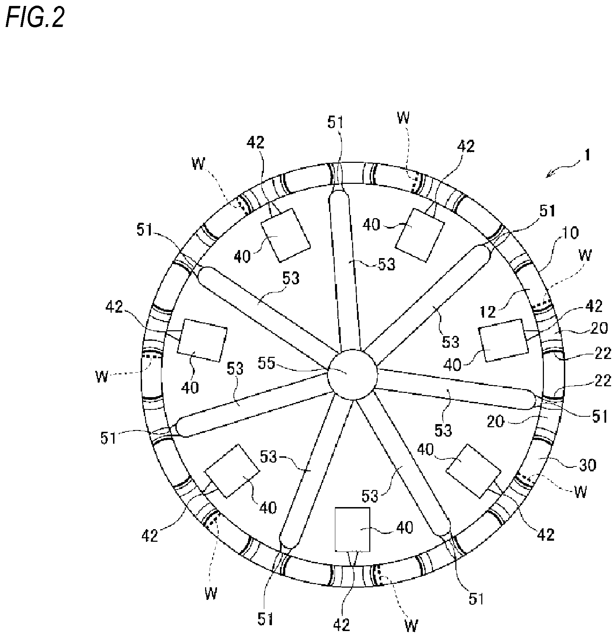

As shown in FIG. 2, the second embodiment is different from the first embodiment, in that the resin reservoir 40 is provided on the inner peripheral surface of the column portion 20. The other configurations are the same as the first embodiment and it is possible to accomplish the effects similar to the first embodiment.

### (Third Embodiment)

Subsequently, a method of manufacturing a bearing cage in accordance with a third embodiment of the present invention is described with reference to the drawing.

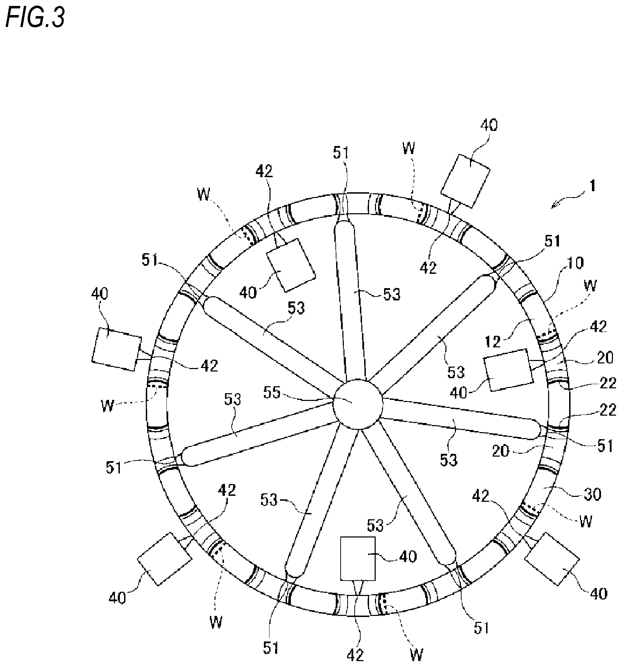

As shown in FIG. 3, the third embodiment is different from the above embodiments, in that the resin reservoirs 40 are provided on the outer peripheral surface or the inner peripheral surface of the column portion 20. More specifically, the adjacent resin reservoirs 40 are provided at different positions of the column portions 20. When one resin reservoir 40 is provided on the outer peripheral surface of the column portion 20, the other resin reservoir 40 is provided on the inner peripheral surface of the column portion 20. In the meantime, the adjacent resin reservoirs 40 are not necessarily required to be provided at the different positions of the column portions 20. That is, at least one resin reservoir 40 of the plurality of resin reservoirs 40 may be provided on the outer peripheral surface of the column portion 20 and at least one resin reservoir 40 may be provided on the inner peripheral surface of the column portion 20. The other configurations are the same as the above embodiments and it is possible to accomplish the effects similar to the above embodiments.

### (Fourth Embodiment)

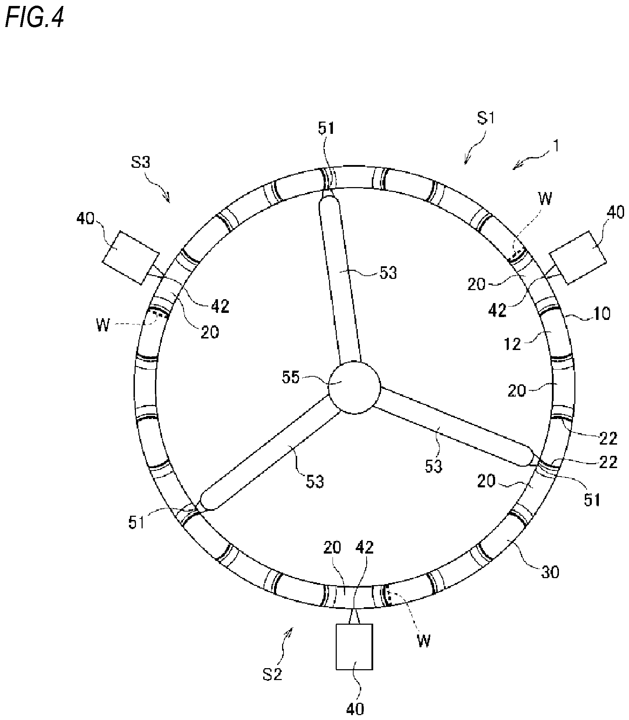

FIG. 4 depicts a bearing cage 1 (hereinafter, also simply referred to as 'cage') of a fourth embodiment. The cage 1 is a so-called crown-shaped cage, and has a substantially annular base part 10, a plurality of column portions 20 of an even multiple of 3 (twelve column portions, in the fourth embodiment) protruding axially from one axial end face 12 of the base part 10 with predetermined intervals in a circumferential direction and a plurality of pockets 30 of an even multiple of 3 (twelve pockets, in the fourth embodiment) each of which is formed by facing surfaces 22, 22 of the pair of adjacent column portions 20, 20 and one axial end face 12 of the base part 10 and is configured to hold therein a rolling element (not shown) of a bearing. That is, the numbers of the column portions 20 and pockets 30 are the same and are an even multiple of 3, and the column portions 20 are provided at both circumferential sides of each pocket 30.

In a method of manufacturing the cage 1, a three-point gate type injection molding is adopted. Specifically, the cage 1 is formed by injecting a melted resin having a reinforced fiber material added thereto from three resin injection gates (hereinafter, simply referred to as 'gates') 51 provided at a peripheral edge portion of an outer periphery-side of an annular cavity (not shown), which is formed in a molding die, into the cavity and cooling and solidifying the melted resin. As the resin material, a resin composition in which a reinforced fiber material (for example, glass fiber or carbon fiber) of 10 to 50 wt% is added to a polyamide-based resin such as 46 nylon, 66 nylon and the like or a resin such as polybutylene terephthalate, polyphenylene sulfide (PPS), polyether ether ketone (PEEK), polyether nitrile (PEN) and the like is used, for example. Meanwhile, although the cavity is not shown in FIG. 4, an internal structure thereof is substantially the same as the structure of the cage 1.

To each gate 51, the melted resin is supplied from a substantially cylindrical sprue 55 via a substantially cylindrical runner 53 extending radially. The sprue 55 extends axially at a substantial center of the cage 1 (the cavity) and is connected to the runner 53. Therefore, the melted resin supplied from the sprue 55 reaches each gate 51 via each runner 53 and is then introduced into the cavity from each gate 51 at the same time.

When regions between the adjacent gates 51 are denoted as first to third regions S1 to S3, the three gates 51 are disposed so that the numbers of the pockets 30 in the first to third regions S1 to S3 are the same. In the fourth embodiment, the number of the pockets 30 is four in each of the first to third regions S1 to S3. Also, each of the three gates 51 is provided at a position deviating from a circumferential center of the column portion 20 towards one side (a counterclockwise direction in FIG. 4) in the circumferential direction.

A resin reservoir 40 capable of reserving therein the melted resin is provided at the column portion 20 most distant from both ends (positions at the gates 51 are provided) of the first to third regions S1 to S3. The resin reservoir 40 is configured to communicate with the outer peripheral surface of the circumferential center of the column portion 20.

In the above configuration, the melted resin injected into the cavity from the gates 51 converges in the vicinity of the column portion 20 most distant from both ends of the first to third regions S1 to S3 between the adjacent gates 51, more specifically, at a position deviating from the circumferential center of the column portion 20 towards one side in the circumferential direction, so that a weld W is formed. Here, since the resin reservoir 40 is provided at the circumferential center of the column portion 20, the formation position of the weld W and the disposition position of the resin reservoir 40 deviate in the circumferential direction, so that it is possible to easily generate a pressure gradient of the melted resin between the weld W and the resin reservoir 40. Therefore, a forcible resin flow is caused due to the pressure gradient, so that it is possible to suppress the reinforced fiber material from being vertically oriented with respect to a flowing direction of the melted resin at the weld W. In particular, as described above, since the weld W is formed at the position deviating from the circumferential center of the column portion 20 towards one side in the circumferential direction and the resin reservoir 40 is disposed at the circumferential center of the column portion 20, the melted resin is caused to forcibly flow in a direction in which a cross-sectional area of a flow path increases from the weld W towards the resin reservoir 40. Therefore, a region of the weld W in which a fiber orientation is disturbed moves to a part of which a cross-sectional area is large, so that the strength of the weld W is further improved. In this way, the orientation of the reinforced fiber material in the weld W is controlled, so that the strength of the weld W is improved and the cage 1 is suppressed from being lowered in terms of the strength.

Here, a cross-sectional area of a communication portion 42 of the resin reservoir 40, which is configured to communicate with the column portion 20 and is an opening to the cavity, is set to be equal to or smaller than 1/4 of a cross-sectional area of the gate 51. According to this setting, after the melted resin converges and the weld W is formed, the melted resin is introduced into the resin reservoir 40. Therefore, it is possible to further securely express the effect of controlling the orientation of the reinforced fiber material by the forcible resin flow at the weld W.

### (Fifth Embodiment)

Subsequently, a method of manufacturing a bearing cage in accordance with a fifth embodiment of the present invention is described with reference to the drawing.

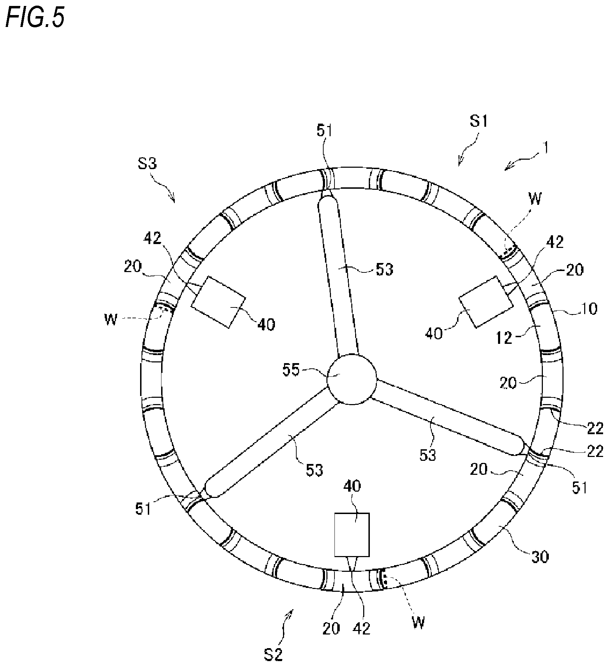

As shown in FIG. 5, the fifth embodiment is different from the fourth embodiment, in that the resin reservoir 40 is provided on the inner peripheral surface of the column portion 20. The other configurations are the same as the fourth embodiment and it is possible to accomplish the effects similar to the fourth embodiment.

### (Sixth Embodiment)

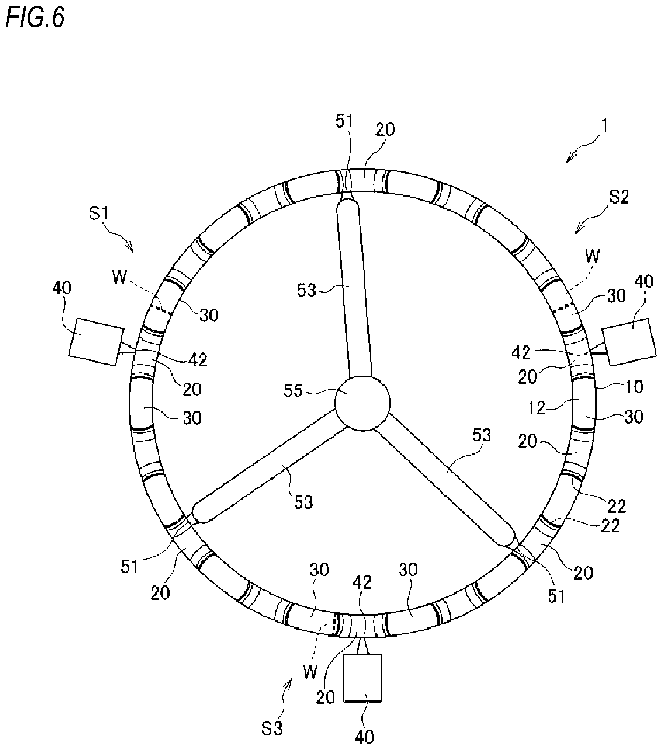

FIG. 6 depicts a bearing cage 1 (hereinafter, also simply referred to as 'cage') of a sixth embodiment. The cage 1 is a so-called crown-shaped cage, and has a substantially annular base part 10, a plurality of even column portions 20 (fourteen column portions, in the sixth embodiment), which is not a multiple of 3, protruding axially from one axial end face 12 of the base part 10 with predetermined intervals in a circumferential direction and a plurality of even pockets 30 (fourteen pockets, in the sixth embodiment), which is not a multiple of 3, each of which is formed by facing surfaces 22, 22 of the pair of adjacent column portions 20, 20 and one axial end face 12 of the base part 10 and is configured to hold therein a rolling element (not shown) of a bearing. That is, the numbers of the column portions 20 and pockets 30 are the same and are even numbers, which are not a multiple of 3, and the column portions 20 are provided at both circumferential sides of each pocket 30.

In a method of manufacturing the cage 1, a three-point gate type injection molding is adopted. Specifically, the cage 1 is formed by injecting a melted resin having a reinforced fiber material added thereto from three resin injection gates (hereinafter, simply referred to as 'gates') 51 provided at a peripheral edge portion of an outer periphery-side of an annular cavity (not shown), which is formed in a molding die, into the cavity and cooling and solidifying the melted resin. As the resin material, a resin composition in which a reinforced fiber material (for example, glass fiber or carbon fiber) of 10 to 50 wt% is added to a polyamide-based resin such as 46 nylon, 66 nylon and the like or a resin such as polybutylene terephthalate, polyphenylene sulfide (PPS), polyether ether ketone (PEEK), polyether nitrile (PEN) and the like is used, for example. Meanwhile, although the cavity is not shown in FIG. 6, an internal structure thereof is substantially the same as the structure of the cage 1.

To each gate 51, the melted resin is supplied from a substantially cylindrical sprue 55 via a substantially cylindrical runner 53 extending radially. The sprue 55 extends axially at a substantial center of the cage 1 (the cavity) and is connected to the runner 53. Therefore, the melted resin supplied from the sprue 55 reaches each gate 51 via each runner 53 and is then introduced into the cavity from each gate 51 at the same time.

Regions between the adjacent gates 51 are denoted as first to third regions S1 to S3. Here, the numbers of the pockets 30 in the first and second regions S1, S2 are the same, are odd numbers and are five in the sixth embodiment. Also, the number of the pockets 30 in the third region S3 is an even number and is set to be greater or smaller than the numbers of the pockets in the first and second regions S1, S2 by one (1). In the sixth embodiment, the number of the pockets 30 in the third region S3 is set to be smaller than the numbers of the pockets in the first and second regions S1, S2 by one, and is four.

Also, each of the three gates 51 is provided to communicate with a position deviating from a circumferential center of the column portion 20. More specifically, the gate 51 separating the first and second regions S1, S2 is provided at a position deviating from the circumferential center of the column portion 20 towards the first region S1. The gate 51 separating the second and third regions S2, S3 is provided at a position deviating from the circumferential center of the column portion 20 towards the third region S3. The gate 51 separating the third and first regions S3, S1 is provided at a position deviating from the circumferential center of the column portion 20 towards the first region S1.

A resin reservoir 40 capable of reserving therein the melted resin is respectively provided at a column portion 20 in the first to third regions S1 to S3. The resin reservoirs 40 in the first and second regions S1, S2 are respectively provided at a circumferential center of one column portion 20 of the pair of column portions 20 adjacent to the pocket 30 (the third pocket 30) positioned at a circumferential center of each of the first and second regions S1, S2. In the sixth embodiment, the resin reservoir 40 in the first region S1 is provided at the column portion 20 positioned at a counterclockwise direction-side of the pocket 30 positioned at the circumferential center, and the resin reservoir 40 in the second region S2 is provided at the column portion 20 positioned at a clockwise direction-side of the pocket 30 positioned at the circumferential center. On the other hand, the resin reservoir 40 in the first region S1 may be provided at the column portion 20 positioned at a clockwise direction-side of the pocket 30 positioned at the circumferential center, and the resin reservoir 40 in the second region S2 may be provided at the column portion 20 positioned at a counterclockwise direction-side of the pocket 30 positioned at the circumferential center. Also, the resin reservoir 40 in the third region S3 is provided at a circumferential center of the column portion 20 (the column portion 20 between the second and third pockets 30) positioned at a circumferential center of the third region S3. Meanwhile, in the sixth embodiment, the resin reservoir 40 is configured to communicate with the outer peripheral surface of the circumferential center of the column portion 20.

In the above configuration, the melted resin injected into the cavity from the gates 51 converges at the pockets 30 most distant from both ends of the first to third regions S1 to S3 between the adjacent gates 51, so that welds W are formed. The welds W in the first and second regions S1, S2 are formed in the vicinity of the circumferentially central portions of the pockets 30 and the weld W in the third region S3 is formed at a position deviating from the circumferential center of the pocket 30 towards the second region S2. Here, since the resin reservoir 40 is provided at the column portion 20, which is adjacent to the pocket 30 at which the weld W is formed, the formation position of the weld W and the disposition position of the resin reservoir 40 deviate in the circumferential direction, so that it is possible to easily generate a pressure gradient of the melted resin between the weld W and the resin reservoir 40. Therefore, a forcible resin flow is caused due to the pressure gradient, so that it is possible to suppress the reinforced fiber material from being vertically oriented with respect to a flowing direction of the melted resin at the weld W. In particular, as described above, since the weld W is formed at the pocket 30 and the resin reservoir 40 is disposed at the circumferential center of the column portion 20 adjacent to the pocket 30, the melted resin is caused to forcibly flow in a direction in which a cross-sectional area of a flow path increases from the weld W towards the resin reservoir 40. Therefore, a region of the weld W in which a fiber orientation is disturbed moves to a part of which a cross-sectional area is large, so that the strength of the weld W is further improved. In this way, the orientation of the reinforced fiber material in the weld W is controlled, so that the strength of the weld W is improved and the cage 1 is suppressed from being lowered in terms of the strength.

Here, a cross-sectional area of a communication portion 42 of the resin reservoir 40, which is configured to communicate with the column portion 20 and is an opening to the cavity, is set to be equal to or smaller than 1/4 of a cross-sectional area of the gate 51. According to this setting, after the melted resin converges and the weld W is formed, the melted resin is introduced into the resin reservoir 40. Therefore, it is possible to further securely express the effect of controlling the orientation of the reinforced fiber material by the forcible resin flow at the weld W.

### (Seventh Embodiment)

Subsequently, a method of manufacturing a bearing cage in accordance with a seventh embodiment of the present invention is described with reference to the drawing.

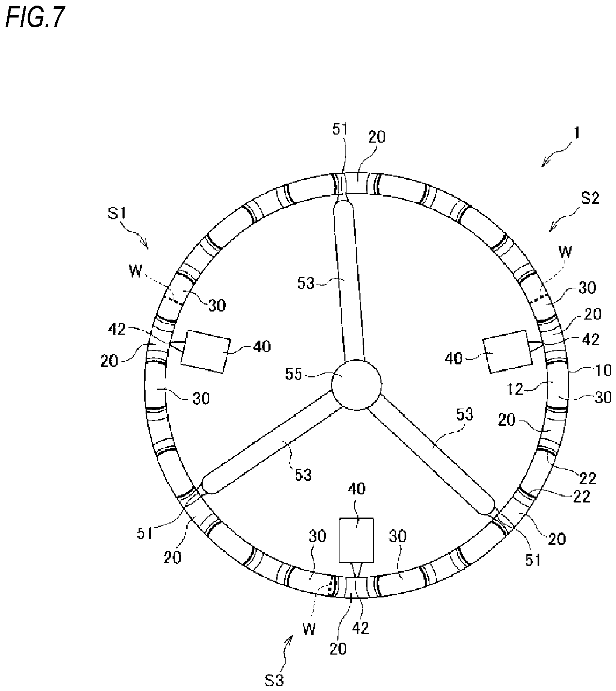

As shown in FIG. 7, the seventh embodiment is different from the sixth embodiment, in that the resin reservoir 40 is provided on the inner peripheral surface of the column portion 20. The other configurations are the same as the sixth embodiment and it is possible to accomplish the effects similar to the sixth embodiment.

### (Eighth Embodiment)

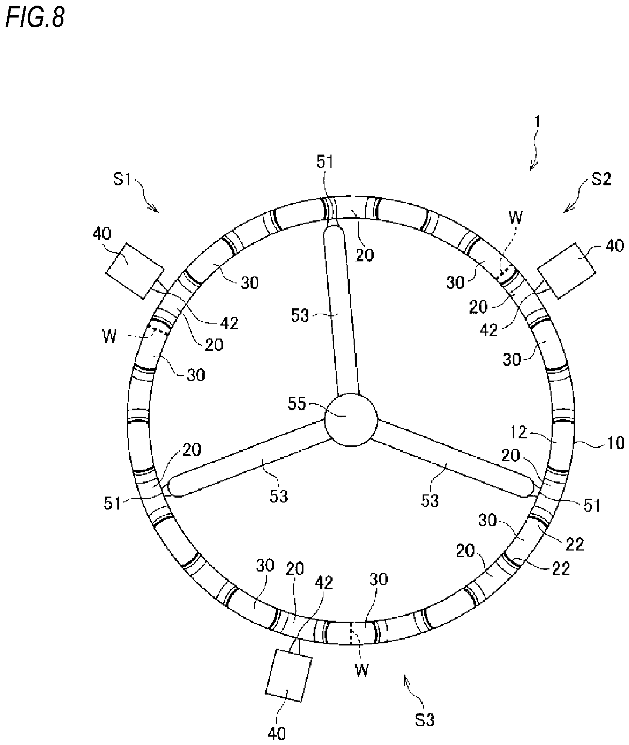

FIG. 8 depicts a bearing cage 1 (hereinafter, also simply referred to as 'cage') of an eighth embodiment. The cage 1 is a so-called crown-shaped cage, and has a substantially annular base part 10, a plurality of odd column portions 20 (thirteen column portions, in the eighth embodiment), which is not a multiple of 3, protruding axially from one axial end face 12 of the base part 10 with predetermined intervals in a circumferential direction and a plurality of odd pockets 30 (thirteen pockets, in the eighth embodiment), which is not a multiple of 3, each of which is formed by facing surfaces 22, 22 of the pair of adjacent column portions 20, 20 and one axial end face 12 of the base part 10 and is configured to hold therein a rolling element (not shown) of a bearing. That is, the numbers of the column portions 20 and pockets 30 are the same and are odd numbers, which are not a multiple of 3, and the column portions 20 are provided at both circumferential sides of each pocket 30.

In a method of manufacturing the cage 1, a three-point gate type injection molding is adopted. Specifically, the cage 1 is formed by injecting a melted resin having a reinforced fiber material added thereto from three resin injection gates (hereinafter, simply referred to as 'gates') 51 provided at a peripheral edge portion of an outer periphery-side of an annular cavity (not shown), which is formed in a molding die, into the cavity and cooling and solidifying the melted resin. As the resin material, a resin composition in which a reinforced fiber material (for example, glass fiber or carbon fiber) of 10 to 50 wt% is added to a polyamide-based resin such as 46 nylon, 66 nylon and the like or a resin such as polybutylene terephthalate, polyphenylene sulfide (PPS), polyether ether ketone (PEEK), polyether nitrile (PEN) and the like is used, for example. Meanwhile, although the cavity is not shown in FIG. 8, an internal structure thereof is substantially the same as the structure of the cage 1.

To each gate 51, the melted resin is supplied from a substantially cylindrical sprue 55 via a substantially cylindrical runner 53 extending radially. The sprue 55 extends axially at a substantial center of the cage 1 (the cavity) and is connected to the runner 53. Therefore, the melted resin supplied from the sprue 55 reaches each gate 51 via each runner 53 and is then introduced into the cavity from each gate 51 at the same time.

Regions between the adjacent gates 51 are denoted as first to third regions S1 to S3. Here, the numbers of the pockets 30 in the first and second regions S1, S2 are the same, are even numbers and are four in the eighth embodiment. Also, the number of the pockets 30 in the third region S3 is an odd number and is set to be greater or smaller than the numbers of the pockets in the first and second regions S1, S2 by one (1). In the eighth embodiment, the number of the pockets 30 in the third region S3 is set to be greater than the numbers of the pockets in the first and second regions S1, S2 by one, and is five.

Also, each of the three gates 51 is provided to communicate with the column portion 20 in each of the first to third regions S1 to S3. More specifically, the gate 51 separating the first and second regions S1, S2 is provided at a position deviating from the circumferential center of the column portion 20 towards the first region S1. The gate 51 separating the second and third regions S2, S3 and the gate 51 separating the third and first regions S3, S1 are provided at the circumferential centers of the column portions 20.

A resin reservoir 40 capable of reserving therein the melted resin is respectively provided at a column portion 20 in the first to third regions S1 to S3. The resin reservoirs 40 in the first and second regions S1, S2 are respectively provided at a circumferential center of the column portion 20 (the column portion 20 between the second and third pockets 30) positioned at a circumferential center of each of the first and second regions S1, S2. Also, the resin reservoir 40 in the third region S3 is provided at a circumferential center of one column portion 20 of the pair of column portions 20 adjacent to the pocket 30 (the third pocket 30) positioned at the circumferential center. In the eighth embodiment, the resin reservoir 40 in the third region S3 is provided at the column portion 20 positioned at a clockwise direction-side of the pocket 30 positioned at the circumferential center. On the other hand, the resin reservoir 40 in the third region S3 may be provided at the column portion 20 positioned at a counterclockwise direction-side of the pocket 30 positioned at the circumferential center. In the eighth embodiment, the resin reservoir 40 is configured to communicate with the outer peripheral surface of the circumferential center of the column portion 20.

In the above configuration, the melted resin injected into the cavity from the gates 51 converges at the pockets 30 most distant from both ends of the first to third regions S1 to S3 between the adjacent gates 51, so that welds W are formed. The weld W in the first region S1 is formed at a position deviating from the circumferential center of the pocket 30 towards the second region S2, the weld W in the second region S2 is formed at a position deviating from the circumferential center of the pocket 30 towards the third region S3 and the weld W in the third region S3 is formed in the vicinity of the circumferentially central portion of the pocket 30. Here, since the resin reservoir 40 is provided at the column portion 20, which is adjacent to the pocket 30 at which the weld W is formed, the formation position of the weld W and the disposition position of the resin reservoir 40 deviate in the circumferential direction, so that it is possible to easily generate a pressure gradient of the melted resin between the weld W and the resin reservoir 40. Therefore, a forcible resin flow is caused due to the pressure gradient, so that it is possible to suppress the reinforced fiber material from being vertically oriented with respect to a flowing direction of the melted resin at the weld W. In particular, as described above, since the weld W is formed at the pocket 30 and the resin reservoir 40 is disposed at the circumferential center of the column portion 20 adjacent to the pocket 30, the melted resin is caused to forcibly flow in a direction in which a cross-sectional area of a flow path increases from the weld W towards the resin reservoir 40. Therefore, a region of the weld W in which a fiber orientation is disturbed moves to a part of which a cross-sectional area is large, so that the strength of the weld W is further improved. In this way, the orientation of the reinforced fiber material in the weld W is controlled, so that the strength of the weld W is improved and the cage 1 is suppressed from being lowered in terms of the strength.

Here, a cross-sectional area of a communication portion 42 of the resin reservoir 40, which is configured to communicate with the column portion 20 and is an opening to the cavity, is set to be equal to or smaller than 1/4 of a cross-sectional area of the gate 51. According to this setting, after the melted resin converges and the weld W is formed, the melted resin is introduced into the resin reservoir 40. Therefore, it is possible to further securely express the effect of controlling the orientation of the reinforced fiber material by the forcible resin flow at the weld W.

### (Ninth Embodiment)

Subsequently, a method of manufacturing a bearing cage in accordance with a ninth embodiment of the present invention is described with reference to the drawing.

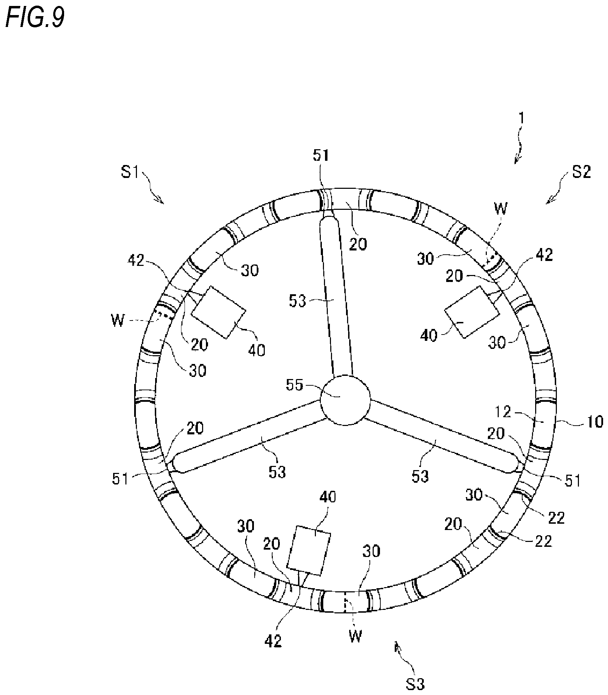

As shown in FIG. 9, the ninth embodiment is different from the eighth embodiment, in that the resin reservoir 40 is provided on the inner peripheral surface of the column portion 20. The other configurations are the same as the eighth embodiment and it is possible to accomplish the effects similar to the eighth embodiment.

### (Tenth Embodiment)

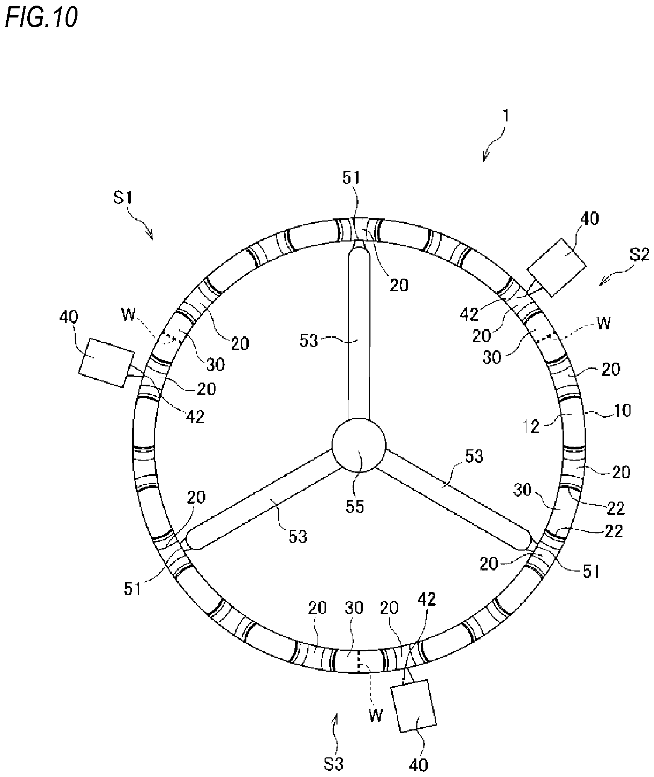

FIG. 10 depicts a bearing cage 1 (hereinafter, also simply referred to as 'cage') of a tenth embodiment. The cage 1 is a so-called crown-shaped cage, and has a substantially annular base part 10, a plurality of column portions 20 of an odd multiple of 3 (fifteen column portions, in the tenth embodiment) protruding axially from one axial end face 12 of the base part 10 with predetermined intervals in a circumferential direction and a plurality of pockets 30 of an odd multiple of 3 (fifteen pockets, in the tenth embodiment) each of which is formed by facing surfaces 22, 22 of the pair of adjacent column portions 20, 20 and one axial end face 12 of the base part 10 and is configured to hold therein a rolling element (not shown) of a bearing. That is, the numbers of the column portions 20 and pockets 30 are the same and are odd multiples of 3, and the column portions 20 are provided at both circumferential sides of each pocket 30.

In a method of manufacturing the cage 1, a three-point gate type injection molding is adopted. Specifically, the cage 1 is formed by injecting a melted resin having a reinforced fiber material added thereto from three resin injection gates (hereinafter, simply referred to as 'gates') 51 provided at a peripheral edge portion of an inner periphery-side of an annular cavity (not shown), which is formed in a molding die, into the cavity and cooling and solidifying the melted resin. As the resin material, a resin composition in which a reinforced fiber material (for example, glass fiber or carbon fiber) of 10 to 50 wt% is added to a polyamide-based resin such as 46 nylon, 66 nylon and the like or a resin such as polybutylene terephthalate, polyphenylene sulfide (PPS), polyether ether ketone (PEEK), polyether nitrile (PEN) and the like is used, for example. Meanwhile, although the cavity is not shown in FIG. 10, an internal structure thereof is substantially the same as the structure of the cage 1.

To each gate 51, the melted resin is supplied from a substantially cylindrical sprue 55 via a substantially cylindrical runner 53 extending radially. The sprue 55 extends axially at a substantial center of the cage 1 (the cavity) and is connected to the runner 53. Therefore, the melted resin supplied from the sprue 55 reaches each gate 51 via each runner 53 and is then introduced into the cavity from each gate 51 at the same time.

When regions between the adjacent gates 51 are denoted as first to third regions S1 to S3, the three gates 51 are disposed so that the numbers of the pockets 30 in the first to third regions S1 to S3 are the same. In the tenth embodiment, the number of the pockets 30 is five in each of the first to third regions S1 to S3. Also, each of the three gates 51 is provided at a circumferential center of the column portion 20.

A resin reservoir 40 capable of reserving therein the melted resin is provided at a circumferential center of one column portion 20 of the pair of column portions 20 adjacent to the pocket 30 (the third pocket 30) positioned at a circumferential center of each of the first to third regions S1 to S3. The resin reservoir 40 is configured to communicate with the outer peripheral surface of the circumferential center of the column portion 20. Meanwhile, in the tenth embodiment, each of the three resin reservoirs 40 provided in the first to third regions S1 to S3 is provided at the column portion 20, which is positioned at the same direction-side (the counterclockwise direction-side in FIG. 10) in the circumferential direction, of the pair of column portions 20 adjacent to the pocket 30 positioned at the circumferential center of each of the first to third regions S1 to S3. Thereby, the flowing direction of the melted resin, the marks of the resin reservoirs 40 and the marks of the resin injection gates 51 become better balanced in the circumferential direction, so that a quality of the manufactured bearing cage 1 is also improved.

In the above configuration, the melted resin injected into the cavity from the three gates 51 converges at the circumferential centers of the adjacent gates 51, i.e., at the circumferential centers of the pockets 30 positioned at the circumferential centers of the first to third regions S1 to S3, so that welds W are formed. Here, since the resin reservoir 40 is provided at the circumferential center of one column portion 20 of the pair of column portions 20 adjacent to the pocket 30, the formation position of the weld W and the disposition position of the resin reservoir 40 deviate in the circumferential direction, so that it is possible to easily generate a pressure gradient of the melted resin between the weld W and the resin reservoir 40. Therefore, a forcible resin flow is caused due to the pressure gradient, so that it is possible to suppress the reinforced fiber material from being vertically oriented with respect to a flowing direction of the melted resin at the weld W.

In particular, since the weld W is formed at the circumferential center of the pocket 30 and the resin reservoir 40 is disposed at the circumferential center of the column portion 20 adjacent to the pocket 30, the melted resin is caused to forcibly flow in a direction in which a cross-sectional area of a flow path increases from the weld W towards the resin reservoir 40. Therefore, a region of the weld W in which a fiber orientation is disturbed moves to a part of which a cross-sectional area is large, so that the strength of the weld W is further improved. In this way, the orientation of the reinforced fiber material in the weld W is controlled, so that the strength of the weld W is improved and the cage 1 is suppressed from being lowered in terms of the strength.

Also, a portion in the vicinity of the portion at which the resin injection gate 51 or the resin reservoir 40 is provided has strength slightly lower than the other portion although it is not the strength of the portion at which the weld W is formed. However, in the tenth embodiment, since the resin injection gate 51 and the resin reservoir 40 are disposed at the circumferential centers of the thick column portions 20, it is possible to keep the strength of the bearing cage 1.

Here, a cross-sectional area of a communication portion 42 of the resin reservoir 40, which is configured to communicate with the column portion 20 and is an opening to the cavity, is set to be equal to or smaller than 1/4 of a cross-sectional area of the gate 51. According to this setting, after the melted resin converges and the weld W is formed, the melted resin is introduced into the resin reservoir 40. Therefore, it is possible to further securely express the effect of controlling the orientation of the reinforced fiber material by the forcible resin flow at the weld W.

### (Eleventh Embodiment)

Subsequently, a method of manufacturing a bearing cage in accordance with an eleventh embodiment of the present invention is described with reference to the drawing.

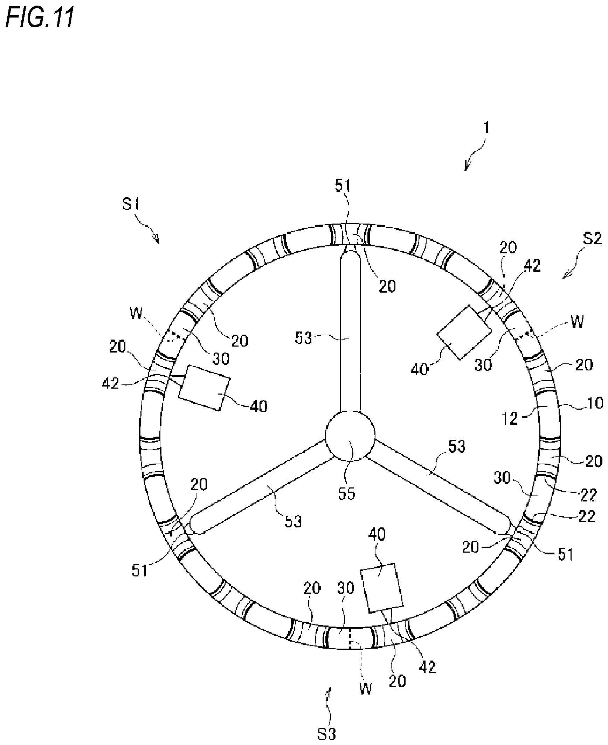

As shown in FIG. 11, the eleventh embodiment is different from the tenth embodiment, in that the resin reservoir 40 is provided on the inner peripheral surface of the column portion 20. The other configurations are the same as the tenth embodiment and it is possible to accomplish the effects similar to the tenth embodiment.

### (Twelfth Embodiment)

Subsequently, a method of manufacturing a bearing cage in accordance with a twelfth embodiment of the present invention is described with reference to the drawing.

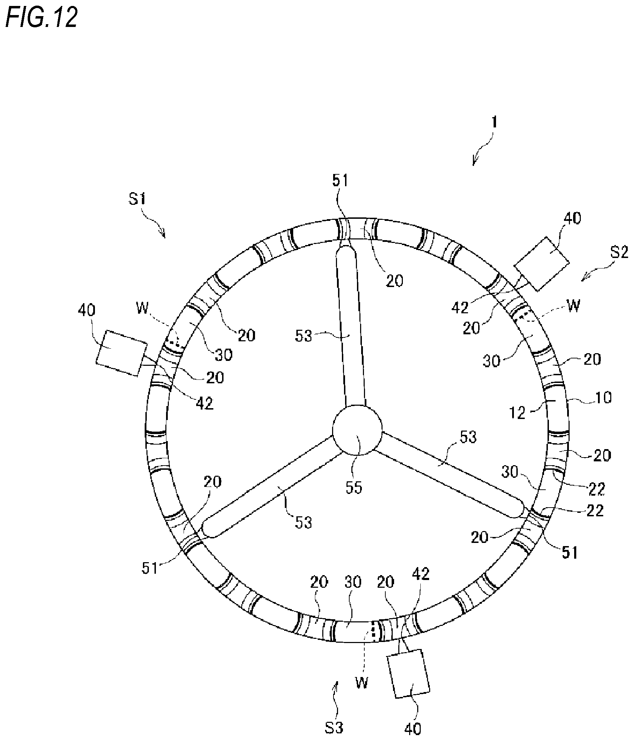

As shown in FIG. 12, the twelfth embodiment is different from the above embodiment, in that each of the three gates 51 is provided at a position deviating from the circumferential center of the column portion 20 towards the same direction-side (the counterclockwise direction-side in FIG. 12) in the circumferential direction. Also, each of the resin reservoirs 40 provided in the first to third regions S1 to S3 is provided at a circumferential center of the column portion 20, which is positioned at the same direction-side as the deviation direction (the counterclockwise direction-side in FIG. 12) of each of the three gates 51, of the pair of column portions 20 adjacent to the pocket 30 (the third pocket 30) positioned at the circumferential center of each of the first to third regions S1 to S3. Thereby, the flowing direction of the melted resin, the marks of the resin reservoirs 40 and the marks of the resin injection gates 51 become better balanced in the circumferential direction, so that a quality of the manufactured bearing cage 1 is also improved.

In the above configuration, the melted resin injected into the cavity from the three gates 51 converges at the circumferential centers of the adjacent gates 51, i.e., at the pockets 30 positioned at the circumferential centers of the first to third regions S1 to S3, so that welds W are formed. The weld W is formed at a position deviating from the circumferential center (bottom) of the pocket 30 towards the deviation direction (the counterclockwise direction-side in FIG. 12) of each of the three gates 51. Therefore, it is possible to prevent the weld W from being formed at the bottom of the pocket 30, which is a relatively thin portion.

Here, since the resin reservoir 40 is provided at the circumferential center of one column portion 20 of the pair of column portions 20 adjacent to the pocket 30 at which the weld W is formed, the formation position of the weld W and the disposition position of the resin reservoir 40 deviate in the circumferential direction, so that it is possible to easily generate a pressure gradient of the melted resin between the weld W and the resin reservoir 40. Therefore, a forcible resin flow is caused due to the pressure gradient, so that it is possible to suppress the reinforced fiber material from being vertically oriented with respect to a flowing direction of the melted resin at the weld W.

Also, the resin reservoir 40 is provided at the column portion 20, which is positioned at the same direction-side as the deviation direction (the counterclockwise direction-side in FIG. 12) of each of the three gates 51, of the pair of column portions 20 adjacent to the pocket 30 at which the weld W is formed, and the resin reservoir 40 is disposed at the column portion 20 close from the weld W. Therefore, the melted resin is caused to forcibly flow in a direction in which a cross-sectional area of a flow path increases from the weld W towards the resin reservoir 40. Therefore, a region of the weld W in which a fiber orientation is disturbed moves to a part of which a cross-sectional area is large, so that the strength of the weld W is further improved.

On the other hand, a case is considered in which the resin reservoir 40 is provided at the column portion 20, which is positioned at an opposite direction-side to the deviation direction (the counterclockwise direction-side in FIG. 12) of each of the three gates 51, of the pair of column portions 20 adjacent to the pocket 30 at which the weld W is formed and the resin reservoir 40 is disposed at the column portion 20 distant from the weld W. In this case, since the pocket bottom, which is the thinnest portion of the pocket 30, exists between the resin reservoir 40 and the weld W, the melted resin is caused to forcibly flow in a direction in which a cross-sectional area of a flow path decreases from the weld W towards the resin reservoir. Therefore, a region of the weld W in which a fiber orientation is disturbed moves to a part of which a cross-sectional area is small. As a result, the strength improvement effect of the weld W may be deteriorated, as compared to the above configuration where the resin reservoir 40 is disposed at the column portion 20 close from the weld W.

Like this, according to the twelfth embodiment, the orientation of the reinforced fiber material in the weld W is controlled, so that the strength of the weld W is improved and the cage 1 is suppressed from being lowered in terms of the strength.

### (Thirteenth Embodiment)

Subsequently, a method of manufacturing a bearing cage in accordance with a thirteenth embodiment of the present invention is described with reference to the drawing.

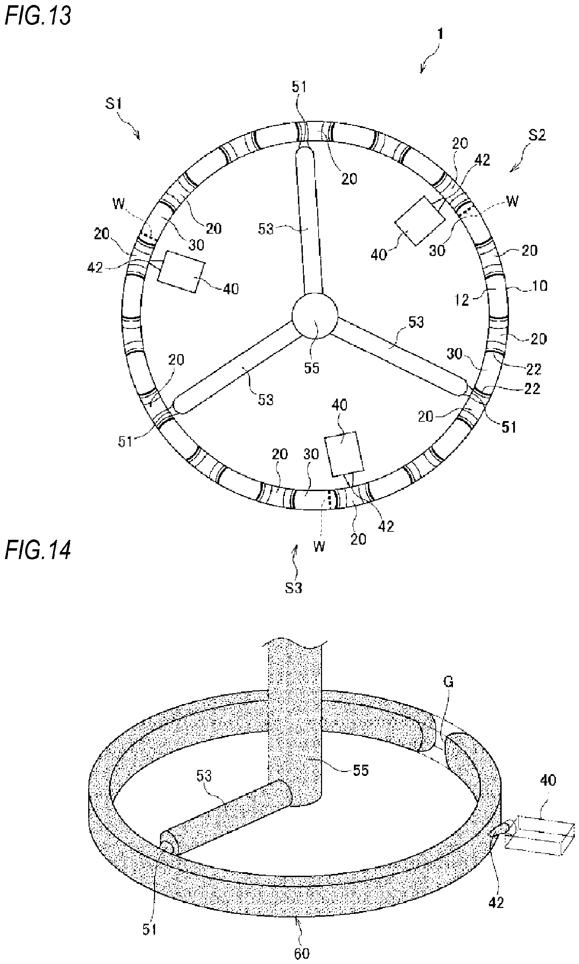

As shown in FIG. 13, the thirteenth embodiment is different from the twelfth embodiment, in that the resin reservoir 40 is provided on the inner peripheral surface of the column portion 20. The other configurations are the same as the twelfth embodiment and it is possible to accomplish the effects similar to the twelfth embodiment.

### (Examples)

Subsequently, an analysis result of a relation between the cross-sectional area of the communication portion 42 of the resin reservoir 40 and the cross-sectional area of the resin injection gate 51 is described.

As shown in FIGS. 14 to 17 and Table 1, in Example 1 and Comparative Examples 1 to 3, when the cavity 60 was configured as a simple annular model, a diameter (a cross-sectional area) of the resin injection gate 51 was constant and a diameter (a cross-sectional area) of the communication portion 42 of the resin reservoir 40 was changed, the flowing aspect of the melted resin G was analyzed by the resin flowing analysis software "3D TIMON" available from Toray Engineering Co., Ltd.

**[Table 1]**

| | Example 1 | Comparative Example 1 | Comparative Example 2 | Comparative Example 3 |
|---|---|---|---|---|
| gate diameter (mm) | 1.2 | | | |
| gate cross-sectional area (mm²) | 1.13 | | | |
| diameter of communication portion of resin reservoir (mm) | 0.6 | 0.8 | 1 | 1.2 |
| cross-sectional area of communication portion of resin reservoir (mm²) | 0.28 | 0.50 | 0.79 | 1.13 |
| ratio of cross-sectional area of communication portion of resin reservoir to cross-sectional area of gate | 0.25 | 0.44 | 0.69 | 1.00 |
| filling pattern | melted resin is not introduced into resin reservoir before it converges. | melted resin is introduced into resin reservoir before it converges. | | |

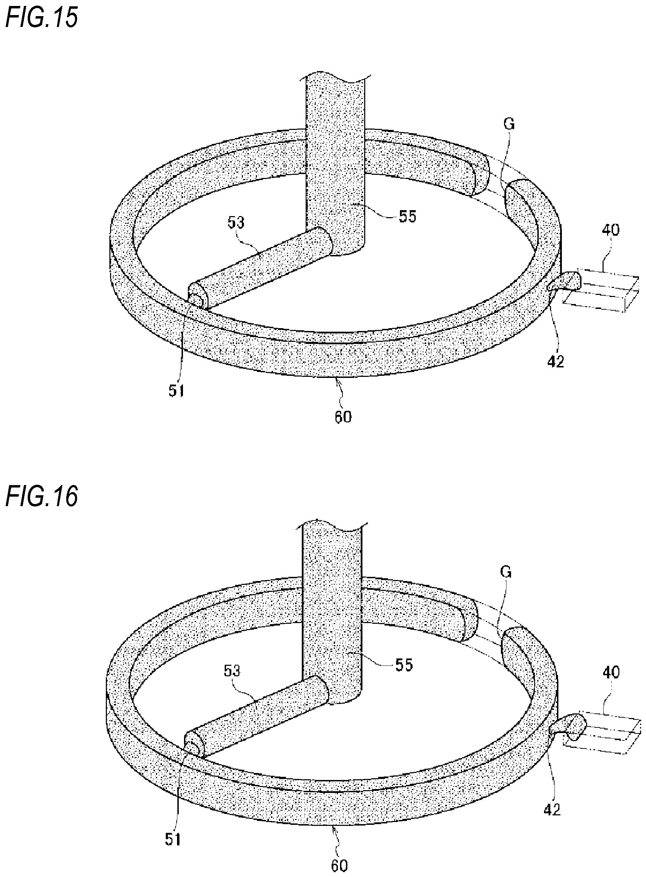

As shown in Comparative Examples 1 to 3 of FIGS. 15 to 17, when the ratio of the cross-sectional area of the communication portion 42 to the cross-sectional area of the resin injection gate 51 is 0.44 to 1.00, the melted resin G is introduced into the resin reservoir 40 before the melted resin G converges each other. In this case, the effect of causing the forcible flow to the weld W after the melted resin G converges is reduced, and it is difficult to express the effect of controlling the orientation of the reinforced fiber material at the weld W.

On the other hand, as shown in Example 1 of FIG. 14, when the ratio of the cross-sectional area of the communication portion 42 to the cross-sectional area of the resin injection gate 51 is 0.25, the melted resin G is not introduced into the resin reservoir 40 before the melted resin G converges. For this reason, the effect of causing the forcible flow to the weld W after the melted resin G converges and the weld W is formed is increased, and the effect of controlling the orientation of the reinforced fiber material at the weld W is expressed.

Like this, when the cross-sectional area of the communication portion 42 of the resin reservoir 40 is equal to or smaller than 1/4 of the cross-sectional area of the resin injection gate 51, the melted resin G is not introduced into the resin reservoir 40 before the melted resin G converges, so that it is possible to clearly express the effect of controlling the orientation of the reinforced fiber material at the weld W.

In the meantime, the present invention is not limited to the respective embodiments and can be appropriately modified and improved.

For example, the resin reservoirs capable of reserving therein the melted resin is not necessarily provided at the plurality of column portions and may be provided at least for one column portion.

The method of manufacturing a bearing cage of the present invention can be applied to not only the crown-shaped cage but also a variety of cages such as a comb-shaped cage.

Also, since the bearing cage of the present invention is less lowered in terms of the strength and has the excellent durability, it can be favorably applied to a rolling bearing. That is, since the rolling bearing includes an inner ring, an outer ring, a plurality of rolling elements provided between the inner and outer rings and a bearing cage configured to rollably hold the rolling elements and having excellent durability, it is possible to satisfy requirements of highspeed rotation, high-load and the like.

The subject application is based on a Japanese Patent Application No. 2015-050957 filed on March 13, 2015.

### Description of Reference Numerals

1: bearing cage
10: base part
12: one axial end face
20: column portion
22: facing surface
30: pocket
40: resin reservoir
42: communication portion
51: resin injection gate
53: runner
55: sprue
60: cavity
G: melted resin
S1 to S3: region
W: weld

## Claims

1. A method of manufacturing a bearing cage (1) that is to be formed by injecting a melted resin, from a plurality of resin injection gates (51) provided at a peripheral edge portion of a substantially annular cavity formed in a molding die, into the cavity,
wherein the bearing cage (1) comprises:
a substantially annular base part (10),
a plurality of column portions (20) protruding axially from one axial end face (12) of the base part (10) with predetermined intervals in a circumferential direction, and
pockets (30) formed by facing surfaces (22) of the pair of adjacent column portions (20) and one axial end face (12) of the base part (10), a number of the pockets (30) being same as a number of the column portions (20),
wherein
at least one column portion (20) is provided with a resin reservoir (40) capable of reserving therein the melted resin, and **characterized in that**
a cross-sectional area of a communication portion (42) of the resin reservoir (40) configured to communicate with the column portion (20) is equal to or smaller than 1/4 of a cross-sectional area of the resin injection gate (51).

2. The method according to claim 1,
wherein the number of the column portions (20) is an even number,
wherein each of the column portions (20) is provided with any one of the resin injection gate (51) and the resin reservoir (40),
wherein the plurality of resin injection gates (51) and the plurality of resin reservoirs (40) are alternately provided at the plurality of column portions (20) in the circumferential direction,
wherein each resin injection gate (51) is disposed at a position deviating from a circumferential center of the column portion (20) towards one side in the circumferential direction, and
wherein each resin reservoir (40) is disposed at the circumferential center of the column portion (20).

3. The method according to claim 1,
wherein the number of the resin injection gates (51) is three,
wherein the number of the column portions (20) is an even multiple of 3, and
wherein when regions between the adjacent resin injection gates (51) are denoted as first to third regions (SI-S3),
the three resin injection gates (51) are provided at positions deviating from circumferential centers of the column portions (20) towards one side in the circumferential direction so that the numbers of the pockets (30) in the first to third regions (SI-S3) are the same, and
the resin reservoirs (40) capable of reserving therein the melted resin are respectively provided at the circumferential centers of the column portions (20) most distant from both ends of the first to third regions (SI-S3).

4. The method according to claim 1,
wherein the number of the resin injection gates (51) is three,
wherein the number of the column portions (20) is an even number which is not a multiple of 3, and
wherein when regions between the adjacent resin injection gates (51) are denoted as first to third regions (SI-S3),
the numbers of the pockets (30) in the first and second regions (S1, S2) are the same and are an odd number,
the number of the pockets (30) in the third region (S3) is an even number and is greater or smaller by one than the numbers of the pockets (30) in the first and second regions (S1, S2),
the resin injection gate (51) separating the first and second regions (S1, S2) is provided at a position deviating from a circumferential center of the column portion (20) towards the first region (S1),
the resin injection gate (51) separating the second and third regions (S2, S3) is provided at a position deviating from a circumferential center of the column portion (20) towards the third region (S3),
the resin injection gate (51) separating the third and first regions (S3, S1) is provided at a position deviating from a circumferential center of the column portion (20) towards the first region (S1),
one of the column portions in each of the first to third regions (S1-S3) is provided with the resin reservoir (40) capable of reserving therein the melted resin,
the resin reservoirs (40) in the first and second regions (S1, S2) are respectively provided at a circumferential center of one column portion (20) of a pair of column portions (20) adjacent to the pocket (30) positioned at a circumferential center of each of the first and second regions (S1, S2), and
the resin reservoir (40) in the third region (S3) is provided at a circumferential center of the column portion (20) positioned at a circumferential center of the third region (S3).

5. The method according to claim 1,
wherein the number of the resin injection gates (51) is three,
wherein the number of the column portions (20) is an odd number, which is not a multiple of 3, and
wherein when regions between the adjacent resin injection gates (51) are denoted as first to third regions (SI-S3),
the numbers of the pockets (30) in the first and second regions (S1, S2) are the same and are an even number,
the number of the pockets (30) in the third region (S3) is an odd number and is greater or smaller by one than the numbers of the pockets (30) in the first and second regions (S1, S2),
the resin injection gate (51) separating the first and second regions (S1, S2) is provided at a position deviating from a circumferential center of the column portion (20) towards the first region (S1),
the resin injection gate (51) separating the second and third regions (S2, S3) and the resin injection gate (51) separating the third and first regions (S3, S1) are provided at circumferential centers of the column portions (20),
one of the column portions (20) in each of the first to third regions (S1-S3) is provided with the resin reservoir (40) capable of reserving therein the melted resin,
the resin reservoirs (40) in the first and second regions (S1, S2) are respectively provided at a circumferential center of the column portion (20) positioned at a circumferential center of each of the first and second regions (S1, S2), and
the resin reservoir (40) in the third region (S3) is provided at a circumferential center of one column portion (20) of a pair of column portions (20) adjacent to the pocket (30) positioned at a circumferential center of the third region (S3).

6. The method according to claim 1,
wherein the number of the resin injection gates (51) is three,
wherein the number of the column portions (20) is an odd multiple of 3, and
wherein when regions between the adjacent resin injection gates (51) are denoted as first to third regions (SI-S3),
the three resin injection gates (51) are respectively provided at the column portions (20) so that the numbers of the pockets (30) in the first to third regions (S1-S3) are the same, and
the resin reservoir (40) capable of reserving therein the melted resin is provided at one column portion (20) of a pair of column portions (20) adjacent to the pocket (30) positioned at a circumferential center of each of the first to third regions (S1-S3).

7. The method according to claim 6,
wherein each of the resin reservoirs (40) provided in the first to third regions (SI-S3) is provided at the column portion (20), which is positioned at a same direction-side in the circumferential direction, of the pair of column portions (20) adjacent to the pocket (30) positioned at the circumferential center of each of the first to third regions (SI-S3).

8. The method according to claim 6,
wherein three resin injection gates (51) are respectively provided at positions deviating from the circumferential centers of the column portions (20) towards a same direction-side in the circumferential direction, and
wherein each of the resin reservoirs (40) provided in the first to third regions (SI-S3) is provided at the column portion (20), which is positioned at the same direction-side as a deviation direction of the three resin injection gates (51), of the pair of column portions (20) adjacent to the pocket (30) positioned at the circumferential center of each of the first to third regions (SI-S3).

## Patentansprüche

1. Verfahren zur Herstellung eines Lagerkäfigs (1), der durch Einspritzen eines geschmolzenen Harzes über eine Vielzahl von Harzeinspritzöffnungen (51), die an einem Umfangsrandabschnitt eines in einem Formwerkzeug ausgebildeten, im Wesentlichen ringförmigen Hohlraums, bereitgestellt sind, in den Hohlraum zu formen ist,
wobei der Lagerkäfig (1) Folgendes umfasst:
einen im Wesentlichen ringförmigen Basisteil (10);
eine Vielzahl von Säulenabschnitten (20), die von einer axialen Endfläche (12) des Basisteils (10) in vorbestimmten Intervallen in einer Umfangsrichtung axial vorstehen, und
Aussparungen (30), die durch einander zugewandte Oberflächen (22) des Paars von benachbarten Säulenabschnitten (20) und eine axiale Endfläche (12) des Basisteils (10) ausgebildet sind, wobei die Anzahl der Aussparungen (30) gleich der Anzahl der Säulenabschnitte (20) ist, wobei
zumindest ein Säulenabschnitt (20) mit einem Harzbehälter (40) bereitgestellt ist, der in der Lage ist, darin das geschmolzene Harz zu lagern, und **dadurch gekennzeichnet, dass**
eine Querschnittsfläche eines Kommunikationsabschnitts (42) des Harzbehälters (40), der ausgelegt ist, um mit dem Säulenabschnitt (20) zu kommunizieren, kleiner oder gleich 1/4 der Querschnittsfläche der Harzeinspritzöffnung (51) ist.

2. Verfahren nach Anspruch 1,
wobei die Anzahl der Säulenabschnitte (20) eine gerade Zahl ist,
wobei jeder der Säulenabschnitte (20) mit einem beliebigen der Harzeinspritzöffnung (51) und des Harzbehälters (40) bereitgestellt ist,
wobei die Vielzahl von Harzeinspritzöffnungen (51) und die Vielzahl von Harzbehältern (40) an der Vielzahl von Säulenabschnitten (20) in Umfangsrichtung abwechselnd bereitgestellt sind,
wobei jede Harzeinspritzöffnung (51) an einer Position angeordnet ist, die gegenüber dem Umfangsmittelpunkt des Säulenabschnitts (20) in Richtung einer Seite in Umfangsrichtung versetzt ist und
wobei jeder Harzbehälter (40) im Umfangsmittelpunkt des Säulenabschnitts (20) angeordnet ist.

3. Verfahren nach Anspruch 1,
wobei die Anzahl der Harzeinspritzöffnungen (51) drei ist,
wobei die Anzahl der Säulenabschnitte (20) ein gerades Vielfaches von drei ist und
wobei, wenn Regionen zwischen benachbarten Harzeinspritzöffnungen (51) als erste bis dritte Region (S1-S3) bezeichnet sind, die drei Harzeinspritzöffnungen (51) in Positionen, die gegenüber den Umfangsmittelpunkten der Säulenabschnitte (20) in Richtung einer Seite in Umfangsrichtung versetzt sind, derart bereitgestellt sind, dass die Anzahl der Aussparungen (30) in der ersten bis dritten Region (S1-S3) gleich ist, und
wobei die Harzbehälter (40), die in der Lage sind, das geschmolzene Harz darin zu lagern, jeweils in den Umfangsmittelpunkten jener Säulenabschnitte (20) bereitgestellt sind, die am entferntesten von beiden Enden der ersten bis dritten Region (S1-S3) sind.

4. Verfahren nach Anspruch 1,
wobei die Anzahl der Harzeinspritzöffnungen (51) drei ist,
wobei die Anzahl der Säulenabschnitte (20) eine gerade Zahl ist, die kein Vielfaches von drei ist, und
wobei, wenn Regionen zwischen benachbarten Harzeinspritzöffnungen (51) als erste bis dritte Region (S1-S3) gekennzeichnet sind,
die Anzahl der Aussparungen (30) in der ersten und zweiten Region (S1, S2) gleich sind und eine ungerade Zahl sind,
die Anzahl der Aussparungen (30) in der dritten Region (S3) eine gerade Zahl ist und um eins größer oder kleiner ist als die Anzahl der Aussparungen (30) in der ersten und zweiten Region (S1, S2),
die Harzeinspritzöffnung (51), die die erste und zweite Region (S1, S2) voneinander trennt, in einer Position, die gegenüber dem Umfangsmittelpunkt des Säulenabschnitts (20) in Richtung der ersten Region (S1) versetzt ist, bereitgestellt ist,
die Harzeinspritzöffnung (51), die die zweite und dritte Region (S2, S3) voneinander trennt, in einer Position, die gegenüber dem Umfangsmittelpunkt des Säulenabschnitts (20) in Richtung der dritten Region (S3) versetzt ist, bereitgestellt ist,
die Harzeinspritzöffnung (51), die die dritte und erste Region (S3, S1) voneinander trennt, in einer Position, die gegenüber dem Umfangsmittelpunkt des Säulenabschnitts (20) in Richtung der ersten Region (S1) versetzt ist, bereitgestellt ist,
einer der Säulenabschnitte in jeder der ersten bis dritten Region (S1-S3) mit dem Harzbehälter (40) bereitgestellt ist, der in der Lage ist, das geschmolzene Harz darin zu lagern,
die Harzbehälter (40) in der ersten und zweiten Region (S1, S2) jeweils im Umfangsmittelpunkt eines Säulenabschnitts (20) eines Paars von Säulenabschnitten (20), das benachbart zur Aussparung (30) ist, die im Umfangsmittelpunkt von jeder der ersten und zweiten Region (S1, S2) angeordnet ist, bereitgestellt sind und
der Harzbehälter (40) in der dritten Region (S3) im Umfangsmittelpunkt des Säulenabschnitts (20), der im Umfangsmittelpunkt der dritten Region (S3) angeordnet ist, bereitgestellt ist.

5. Verfahren nach Anspruch 1,
wobei die Anzahl der Harzeinspritzöffnungen (51) drei ist,
wobei die Anzahl der Säulenabschnitte (20) eine ungerade Zahl ist, die kein Vielfaches von drei ist, und
wobei, wenn Regionen zwischen benachbarten Harzeinspritzöffnungen (51) als erste bis dritte Region (S1-S3) gekennzeichnet sind,
die Anzahl der Aussparungen (30) in der ersten und zweiten Region (S1, S2) gleich sind und eine gerade Zahl sind,
die Anzahl der Aussparungen (30) in der dritten Region (S3) eine ungerade Zahl ist und um eins größer oder kleiner ist als die Anzahl der Aussparungen (30) in der ersten und zweiten Region (S1, S2),
die Harzeinspritzöffnung (51), die die erste und zweite Region (S1, S2) voneinander trennt, in einer Position, die gegenüber dem Umfangsmittelpunkt des Säulenabschnitts (20) in Richtung der ersten Region (S1) versetzt ist, bereitgestellt ist,
die Harzeinspritzöffnung (51), die die zweite und dritte Region (S2, S3) voneinander trennt, und die Harzeinspritzöffnung (51), die die dritte und erste Region (S3, S1) voneinander trennt, in den Umfangsmittelpunkten der Säulenabschnitte (20) bereitgestellt sind,
einer der Säulenabschnitte (20) in jeder der ersten bis dritten Region (S1-S3) mit dem Harzbehälter (40) bereitgestellt ist, der in der Lage ist, das geschmolzene Harz darin zu lagern,
die Harzbehälter (40) in der ersten und zweiten Region (S1, S2) jeweils im Umfangsmittelpunkt des Säulenabschnitts (20), der im Umfangsmittelpunkt von jeder der ersten und zweiten Region (S1, S2) angeordnet ist, bereitgestellt sind und
der Harzbehälter (40) in der dritten Region (S3) im Umfangsmittelpunkt des Säulenabschnitts (20), der im Umfangsmittelpunkt von jeder der ersten und zweiten Region (S1, S2) angeordnet ist, bereitgestellt ist, und
der Harzbehälter (40) in der dritten Region (S3) im Umfangsmittelpunkt eines Säulenabschnitts (20) eines Paars von Säulenabschnitten (20), das benachbart zur Aussparung (30) ist, die im Umfangsmittelpunkt der dritten Region (S3) angeordnet ist, bereitgestellt ist.

6. Verfahren nach Anspruch 1,
wobei die Anzahl der Harzeinspritzöffnungen (51) drei ist,
wobei die Anzahl der Säulenabschnitte (20) ein ungerades Vielfaches von drei ist, und
wobei, wenn Regionen zwischen den benachbarten Harzeinspritzöffnungen (51) als erste bis dritte Region (S1-S3) gekennzeichnet sind,
die drei Harzeinspritzöffnungen (51) jeweils derart an den Säulenabschnitten (20) bereitgestellt sind, dass die Anzahl der Aussparungen (30) in der ersten bis dritten Region (S1-S3) gleich ist, und
der Harzbehälter (40), der in der Lage ist, das geschmolzene Harz darin zu lagern, an einem Säulenabschnitt (20) eines Paars von Säulenabschnitten (20), das benachbart zur Aussparung (30) ist, die im Umfangsmittelpunkt von jeder der ersten bis dritten Region (S1-S3) angeordnet ist, bereitgestellt ist.

7. Verfahren nach Anspruch 6,
wobei jeder der Harzbehälter (40), der in der ersten bis dritten Region (S1-S3) bereitgestellt ist, an dem auf derselben Richtungsseite in Umfangsrichtung bereitgestellten Säulenabschnitt (20) des Paars von Säulenabschnitten (20), das benachbart zur Aussparung (30) ist, die im Umfangsmittelpunkt von jeder der ersten bis dritten Region (S1-S3) angeordnet ist, bereitgestellt ist.

8. Verfahren nach Anspruch 6,
wobei drei Harzeinspritzöffnungen (51) jeweils an Positionen bereitgestellt sind, die gegenüber den Umfangsmittelpunkten der Säulenabschnitte (20) in Richtung der gleichen Richtungsseite in Umfangsrichtung versetzt sind, bereitgestellt sind, und
wobei jeder der Harzbehälter (40), die in der ersten bis dritten Region (S1-S3) bereitgestellt sind, am in Richtung der gleichen Richtungsseite wie eine Versetzungsrichtung der drei Harzeinspritzöffnungen (51) bereitgestellten Säulenabschnitt (20) des Paars von Säulenabschnitten (20), das benachbart zur Aussparung (30) ist, die im Umfangsmittelpunkt von jeder der ersten bis dritten Region (S1-S3) angeordnet ist, bereitgestellt ist.

## Revendications

1. Procédé de fabrication d'une cage de palier (1) qui doit être formée en injectant une résine fondue, à partir d'une pluralité de grilles d'injection de résine (51) prévues au niveau d'une portion de bord périphérique d'une cavité sensiblement annulaire formée dans une matrice de moulage, jusque dans la cavité,
dans lequel la cage de palier (1) comprend :
une partie de base sensiblement annulaire (10),
une pluralité de portions de colonne (20) faisant saillie axialement à partir d'une face d'extrémité axiale (12) de la partie de base (10) avec des intervalles prédéterminés dans une direction circonférentielle, et
des poches (30) formées par des surfaces opposées (22) de la paire de portions de colonne adjacentes (20) et une face d'extrémité axiale (12) de la partie de base (10), un nombre des poches (30) étant identique à un nombre des portions de colonne (20),
dans lequel au moins une portion de colonne (20) est munie d'un réservoir de résine (40) capable d'y réserver la résine fondue, et **caractérisé en ce qu'**une aire de section transversale d'une portion de communication (42) du réservoir de résine (40) configurée pour communiquer avec la portion de colonne (20) est égale ou inférieure à 1/4 d'une aire de section transversale de la grille d'injection de résine (51).

2. Procédé selon la revendication 1,
dans lequel le nombre des portions de colonne (20) est un nombre pair,
dans lequel chacune des portions de colonne (20) est munie de l'une quelconque parmi la grille d'injection de résine (51) et le réservoir de résine (40),
dans lequel la pluralité de grilles d'injection de résine (51) et la pluralité de réservoirs de résine (40) sont disposées en alternance au niveau de la pluralité de portions de colonne (20) dans la direction circonférentielle,
dans lequel chaque grille d'injection de résine (51) est disposée dans une position s'écartant d'un centre circonférentiel de la portion de colonne (20) vers un côté dans la direction circonférentielle, et
dans lequel chaque réservoir de résine (40) est disposé au niveau du centre circonférentiel de la portion de colonne (20) .

3. Procédé selon la revendication 1,
dans lequel le nombre de grilles d'injection de résine (51) est égal à trois,
dans lequel le nombre des portions de colonne (20) est un multiple pair de 3, et
dans lequel, lorsque des régions entre les grilles d'injection de résine adjacentes (51) sont désignées en tant que première à troisième régions (S1-S3),
les trois grilles d'injection de résine (51) sont disposées dans des positions s'écartant des centres circonférentiels des portions de colonne (20) vers un côté dans la direction circonférentielle de sorte que les nombres des poches (30) dans les première à troisième régions (S1-S3) sont identiques, et
les réservoirs de résine (40) capables d'y réserver la résine fondue sont respectivement disposés au niveau des centres circonférentiels des portions de colonne (20) les plus éloignées des deux extrémités des première à troisième régions (S1-S3).

4. Procédé selon la revendication 1,
dans lequel le nombre de grilles d'injection de résine (51) est égal à trois,
dans lequel le nombre des portions de colonne (20) est un nombre pair qui n'est pas un multiple de 3, et
dans lequel, lorsque des régions entre les grilles d'injection de résine adjacentes (51) sont désignées en tant que première à troisième régions (S1-S3),
les nombres des poches (30) dans les première et deuxième régions (S1, S2) sont identiques et sont un nombre impair,
le nombre des poches (30) dans la troisième région (S3) est un nombre pair et est supérieur ou inférieur d'un au nombre des poches (30) dans les première et deuxième régions (S1, S2),
la grille d'injection de résine (51) séparant les première et deuxième régions (S1, S2) est disposée dans une position s'écartant d'un centre circonférentiel de la portion de colonne (20) vers la première région (S1),
la grille d'injection de résine (51) séparant les deuxième et troisième régions (S2,S3) est disposée dans une position s'écartant d'un centre circonférentiel de la portion de colonne (20) vers la troisième région (S3),
la grille d'injection de résine (51) séparant les troisième et première régions (S3, S1) est disposée dans une position s'écartant d'un centre circonférentiel de la portion de colonne (20) vers la première région (S1),
l'une des portions de colonne dans chacune des première à troisième régions (S1-S3) est munie du réservoir de résine (40) capable d'y réserver la résine fondue,
les réservoirs de résine (40) dans les première et deuxième régions (S1, S2) sont respectivement disposés au niveau d'un centre circonférentiel d'une portion de colonne (20) d'une paire de portions de colonne (20) adjacentes à la poche (30) positionnée au niveau d'un centre circonférentiel de chacune des première et deuxième régions (S1, S2), et
le réservoir de résine (40) dans la troisième région (S3) est prévu au niveau d'un centre circonférentiel de la portion de colonne (20) positionnée au niveau d'un centre circonférentiel de la troisième région (S3).

5. Procédé selon la revendication 1,
dans lequel le nombre de grilles d'injection de résine (51) est égal à trois,
dans lequel le nombre des portions de colonne (20) est un nombre impair qui n'est pas un multiple de 3, et
dans lequel, lorsque des régions entre les grilles d'injection de résine adjacentes (51) sont désignées en tant que première à troisième régions (S1-S3),
les nombres des poches (30) dans les première et deuxième régions (S1, S2) sont identiques et sont un nombre pair,
le nombre des poches (30) dans la troisième région (S3) est un nombre impair et est supérieur ou inférieur d'un au nombre des poches (30) dans les première et deuxième régions (S1, S2),
la grille d'injection de résine (51) séparant les première et deuxième régions (S1, S2) est disposée dans une position s'écartant d'un centre circonférentiel de la portion de colonne (20) vers la première région (S1),
la grille d'injection de résine (51) séparant les deuxième et troisième régions (S2, S3) et la grille d'injection de résine (51) séparant les troisième et première régions (S3, S1) sont disposées au niveau des centres circonférentiels des portions de colonne (20),
l'une des portions de colonne (20) dans chacune des première à troisième régions (S1-S3) est munie du réservoir de résine (40) capable d'y réserver la résine fondue,
les réservoirs de résine (40) dans les première et deuxième régions (S1, S2) sont respectivement disposés au niveau d'un centre circonférentiel de la portion de colonne (20) positionnée au niveau d'un centre circonférentiel de chacune des première et deuxième régions (S1, S2), et
le réservoir de résine (40) dans la troisième région (S3) est disposé au niveau d'un centre circonférentiel d'une portion de colonne (20) d'une paire de portions de colonne (20) adjacentes à la poche (30) positionnée au niveau d'un centre circonférentiel de la troisième région (S3).

6. Procédé selon la revendication 1,
dans lequel le nombre de grilles d'injection de résine (51) est égal à trois,
dans lequel le nombre des portions de colonne (20) est un multiple impair de 3, et
dans lequel, lorsque des régions entre les grilles d'injection de résine adjacentes (51) sont désignées en tant que première à troisième régions (S1-S3),
les trois grilles d'injection de résine (51) sont respectivement prévues au niveau des portions de colonne (20) de sorte que les nombres des poches (30) dans les première à troisième régions (S1-S3) sont identiques, et
le réservoir de résine (40) capable d'y réserver la résine fondue est prévu au niveau d'une portion de colonne (20) d'une paire de portions de colonne (20) adjacentes à la poche (30) positionnée au niveau d'un centre circonférentiel de chacune des première à troisième régions (S1-S3).

7. Procédé selon la revendication 6,
dans lequel chacun des réservoirs de résine (40) prévus dans les première à troisième régions (S1-S3) est disposé au niveau de la portion de colonne (20), qui est positionnée au niveau d'un côté de direction identique dans la direction circonférentielle, de la paire de portions de colonne (20) adjacentes à la poche (30) positionnée au niveau du centre circonférentiel de chacune des première à troisième régions (S1-S3).

8. Procédé selon la revendication 6,
dans lequel trois grilles d'injection de résine (51) sont respectivement disposées dans des positions s'écartant des centres circonférentiels des portions de colonne (20) vers un côté de direction identique dans la direction circonférentielle, et
dans lequel chacun des réservoirs de résine (40) prévus dans les première à troisième régions (S1-53) est disposé au niveau de la portion de colonne (20), qui est positionnée au niveau du côté de direction identique à une direction d'écart des trois grilles d'injection de résine (51), de la paire de portions de colonne (20) adjacentes à la poche (30) positionnée au niveau du centre circonférentiel de chacune des première à troisième régions (S1-S3).
